(19) Europäisches Patentamt
European Patent Office
Office européen des brevets

(11) **EP 2 632 739 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **11772900.4**

(22) Anmeldetag: **19.10.2011**

(51) Int Cl.:
*B42D 15/00* (2006.01)    *G02B 5/02* (2006.01)
*G02B 5/18* (2006.01)    *G02B 27/12* (2006.01)
*B42D 25/425* (2014.01)    *B42D 25/29* (2014.01)
*B42D 25/00* (2014.01)

(86) Internationale Anmeldenummer:
**PCT/EP2011/005272**

(87) Internationale Veröffentlichungsnummer:
**WO 2012/055505 (03.05.2012 Gazette 2012/18)**

(54) **SICHERHEITSELEMENT MIT OPTISCH VARIABLEM FLÄCHENMUSTER**

SECURITY ELEMENT HAVING OPTICALLY VARIABLE SURFACE PATTERN

ÉLÉMENT DE SÉCURITÉ COMPORTANT UN MOTIF DE SURFACE OPTIQUEMENT VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2010 DE 102010049617**

(43) Veröffentlichungstag der Anmeldung:
**04.09.2013 Patentblatt 2013/36**

(73) Patentinhaber: **Giesecke & Devrient GmbH 81677 München (DE)**

(72) Erfinder: **FUHSE, Christian 83624 Otterfing (DE)**

(56) Entgegenhaltungen:
**WO-A2-2006/133863    DE-A1-102005 061 749
DE-A1-102007 019 522**

**Beschreibung**

Die Erfindung betrifft ein Sicherheitselement für Sicherheitspapiere, Wertdokumente und andere Datenträger, das in einem Flächenbereich ein optisch variables Flächenmuster enthält. Die Erfindung betrifft auch ein Verfahren zur Herstellung eines derartigen Sicherheitselements und einen Datenträger mit einem solchen Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Dabei ist bekannt, Hologramme, holographische Gitterbilder und andere hologrammähnliche Beugungsstrukturen ihrerseits gegen Fälschung zu sichern, indem eine versteckte Bildinformation in die Beugungsstrukturen eingebracht wird. Dabei wird zusätzlich zu einer primären, offen sichtbaren Bildinformation, eine versteckte Bildinformation in der Beugungsstruktur untergebracht, die nicht ohne besondere Maßnahmen erkennbar ist. Ein Beispiel einer Beugungsstruktur mit einer derartigen versteckten Information ist in der Druckschrift WO 2005/038499 A2 beschrieben.

Grundlage solcher Sicherheitselemente sind direkt belichtete oder aus computerberechneten Beugungsgitteranordnungen erzeugte Hologramme. Werden solche Hologramme mit einem Laserstrahl beleuchtet, so projiziert das am Sicherheitselement gebeugte Licht eine Darstellung auf einen Schirm. Neben dieser gewünschten, direkten Darstellung tritt jedoch aufgrund der Symmetrie der Beugungsgitter auch eine zweite, sogenannte konjugierte Abbildung auf.

Bei direkt belichteten und/ oder aus symmetrischen Beugungsgittern, insbesondere den dabei üblichen Sinusgittern, aufgebauten Sicherheitselementen sind das direkte und konjugierte Bild gleich hell. Da das konjugierte Bild im Allgemeinen seitenverkehrt ist, wurde aus ästhetischen Gründen und auch zur Erhöhung der Fälschungssicherheit bereits versucht, Sicherheitsmerkmale zu schaffen, bei denen kein oder nur ein schwaches konjugiertes Bild auftritt.

Ein mögliches Verfahren zur Erzeugung solcher asymmetrischen Projektionen ist in der Druckschrift EP 0 762 238 A1 beschrieben. Dabei werden asymmetrische Beugungsstrukturen, insbesondere beugende Sägezahngitter, eingesetzt, bei denen die dem direkten bzw. konjugierten Bild entsprechende erste bzw. minus erste Beugungsordnung sehr unterschiedlich hell sein können.

Das Patentdokument DE 10 2007 019522 A1 offenbart ein Sicherheitselement, das unregelmässige Facetten aufweist.

Ausgehend davon liegt der Erfindung die Aufgabe zugrunde, ein Sicherheitselement der eingangs genannten Art weiter zu verbessern und insbesondere ein einfach und kostengünstig herstellbares Sicherheitselement mit hoher Fälschungssicherheit zu schaffen.

Diese Aufgabe wird durch die Merkmale der unabhängigen Ansprüche gelöst. Weiterbildungen der Erfindung sind Gegenstand der Unteransprüche. Gemäß Erfindung enthält ein Sicherheitselement der eingangs genannten Art ein optisch variables Flächenmuster, das aus einer Mehrzahl von im Wesentlichen strahlenoptisch wirkenden Facetten gebildet ist, deren Abmessungen in zumindest einer Richtung der Ebene des Flächenbereichs kleiner als 30 $\mu$m sind, und die in dem Flächenbereich aperiodisch angeordnet sind. Die im Wesentlichen strahlenoptisch wirkenden Facetten reflektieren oder brechen einfallendes Licht somit achromatisch und anders als ein Beugungsgitter ohne Farbaufspaltung oder störende Beugungsreflexe.

Die Facetten sind bevorzugt durch ebene Flächenstücke gebildet, die jeweils durch eine Neigung zur Ebene des Flächenbereichs und einen Azimutwinkel charakterisiert sind.

In einer vorteilhaften Erfindungsvariante sind die Facetten zumindest teilweise als reflektierende Facetten ausgebildet. Die Facetten können ebenfalls mit Vorteil zumindest teilweise als transmittierende Facetten mit brechender Wirkung ausgebildet sein. Es können auch reflektierende und transmittierende Facetten in einem Sicherheitselement kombiniert sein bzw. semitransparente Facetten vorliegen.

Die Facetten sind in dem Flächenbereich vorzugsweise unregelmäßig angeordnet, beispielsweise gemäß einer Pseudozufallszahlenverteilung. Pseudozufallszahlen sind Zahlenfolgen, die zwar zufällig erscheinen, aber durch einen deterministischen Algorithmus berechnet werden und daher im strengen Sinn keine echten Zufallszahlen sind. Dennoch werden Pseudozufallszahlen verbreitet eingesetzt, da die statistischen Eigenschaften einer Pseudozufallszahlenverteilung, wie Gleichwahrscheinlichkeit der einzelnen Zahlen oder die statistische Unabhängigkeit aufeinanderfolgender Zahlen, für praktische Zwecke in der Regel ausreichen und Pseudozufallszahlen mit Computern im Gegensatz zu echten Zufallszahlen einfach zu erzeugen sind. Eine Pseudozufallszahlenverteilung ist stets aperiodisch im Sinn der vorliegenden Anmeldung, da es bei einer Pseudozufallszahlenverteilung keinen festen, konstanten Abstand ("Periode") aufeinanderfolgender Werte gibt.

Gemäß einer vorteilhaften Erfindungsvariante sind die Facetten in dem Flächenbereich mit gleicher Form und Größe angeordnet. Alternativ sind die Facetten in dem Flächenbereich mit variierender Form und/ oder Größe angeordnet, wobei die Facetten in dem Flächenbereich insbesondere mit aperiodisch oder sogar unregelmäßig variierender Form und/oder Größe angeordnet sind. In einer vorteilhaften Ausgestaltung wird der zur Verfügung stehende Flächenbereich vollständig mit Facetten überdeckt, so dass sich durch die Überlappung der Facetten automatisch unterschiedliche Facettenformen und -größen ergeben.

Vorteilhaft weisen die Facetten eine maximale Ausdehnung in der Ebene des Flächenbereichs auf, die zwischen 2 μm und 30 μm, insbesondere zwischen 5 μm und 15 μm liegt. In der Ebene des Flächenbereichs weisen die Facetten mit Vorteil eine minimale Ausdehnung von 2 μm oder mehr, insbesondere von 5 μm oder mehr auf.

Die Facetten können mit verschiedenartigen Beschichtungen versehen sein, beispielsweise können die Facetten zumindest bereichsweise mit einer reflektierenden und/oder farbigen oder farbkippenden Beschichtung, insbesondere einer Beschichtung mit einem Interferenzsystem aus Absorber, Dielektrikum und Reflektor versehen sein. Die reflektierende Beschichtung kann beispielsweise durch eine reflektierende opake Metallschicht oder durch eine dünne oder gerasterte semitransparente metallische Beschichtung gebildet sein. Die farbkippende Beschichtung ist vorzugsweise durch ein Dünnschichtelement mit einer Reflexionsschicht, einer Absorberschicht und einer zwischen der Reflexionsschicht und der Absorberschicht angeordneten dielektrischen Abstandsschicht oder durch ein Dünnschichtelement mit zwei Absorberschichten und einer zwischen den beiden Absorberschichten angeordneten dielektrischen Abstandsschicht gebildet. Schließlich kommt auch eine hochbrechende dielektrische Beschichtung oder eine Beschichtung aus einer cholesterischen Flüssigkristallschicht in Betracht.

In einer vorteilhaften Ausgestaltung erzeugt das optisch variable Flächenmuster eine versteckte Bildinformation, die ohne Hilfsmittel für einen Betrachter nicht erkennbar ist. Das optisch variable Flächenmuster kann auch mit einem weiteren Sicherheitsmerkmal kombiniert sein, insbesondere mit einem offen sichtbaren Sicherheitsmerkmal, wie einem Hologramm oder einer optisch variablen Sägezahngitterdarstellung. Letzteres biete sich insbesondere dann an, wenn das optisch variable Flächenmuster selbst eine versteckte Bildinformation erzeugt.

Bei einer Weiterbildung der Erfindung enthält das optisch variable Flächenmuster mehrere Teilbereiche, die unterschiedliche Darstellungen zeigen. Das Sicherheitselement selbst ist mit besonderem Vorteil ein Projektions-Sicherheitselement, das die unterschiedlichen Darstellungen bei gerichteter, paralleler Beleuchtung auf eine Auffangfläche projiziert. Die Auffangfläche kann beispielsweise ein Schirm oder eine Mattscheibe sein und kann sowohl eben als auch gekrümmt sein.

Die Erfindung enthält auch einen Datenträger, insbesondere ein Sicherheitspapier oder Wertdokument, mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote handeln, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Gegenstand der Erfindung ist weiter eine Prägeform zum Erzeugen einer Prägestruktur, mit einem vorzugsweise metallischen Hauptkörper, der in einem Flächenbereich ein optisch variables Flächenmuster enthält, welches bei unterschiedlicher Beleuchtungs- und/oder Betrachtungsrichtung unterschiedliche Darstellungen zeigt, wobei das optisch variable Flächenmuster aus einer Mehrzahl von im Wesentlichen strahlenoptisch wirkenden Facetten gebildet ist, deren Abmessungen in zumindest einer Richtung der Ebene des Flächenbereichs kleiner als 30 μm sind, und die in der Ebene des Flächenbereichs aperiodisch angeordnet sind.

Die Prägeform stellt in der Regel die Negativform des in der Prägestruktur gewünschten Flächenmusters dar. Mit Hilfe der Prägeform wird das gewünschte Zielsubstrat, beispielsweise eine auf einer Folie aufgebrachte thermoplastische oder UV-härtbare Lackschicht geprägt und so mit dem gewünschten Flächenmuster versehen. Entsprechende Verfahren sind dem Fachmann bekannt und im Stand der Technik beschrieben.

Die Erfindung betrifft weiter ein Verfahren zum Herstellen eines Sicherheitselements zur Absicherung von Sicherheitspapieren, Wertdokumenten und andere Datenträgern, bei dem ein Substrat bereitgestellt wird und das Substrat in einem Flächenbereich mit einem optisch variablen Flächenmuster versehen wird, welches bei unterschiedlicher Beleuchtungs- und/ oder Betrachtungsrichtung unterschiedliche Darstellungen zeigt, wobei das optisch variable Flächenmuster aus einer Mehrzahl von im Wesentlichen strahlenoptisch wirkenden Facetten gebildet wird, deren Abmessungen in zumindest einer Richtung der Ebene des Flächenbereichs kleiner als 30 μm sind, und die in dem Flächenbereich aperiodisch angeordnet werden.

Zur Herstellung können die aus dem Stand der Technik bekannten Verfahren, beispielsweise optische Lithographie oder Elektronenstrahllithographie, eingesetzt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1 eine schematische Darstellung einer Banknote nach einem Ausführungsbeispiel der Erfindung,

Fig. 2 schematisch ein erfindungsgemäßes Sicherheitselement im Querschnitt,

Fig. 3 einen Weg zur Erzeugung eines erfindungsgemäßen Sicherheitselements, wobei (a) die Geometrie bei der Projektion der Darstellungen eines Projektions-Sicherheitselements und die gewünschten Darstellungen zeigt, (b) die für die drei Bildpunkte von (a) bestimmten Facetten zeigt, und (c) eine Möglichkeit zeigt, den Flächenbereich aperiodisch mit Facetten zu füllen,

Fig. 4    eine weitere Möglichkeit zeigt, den Flächenbereich aperiodisch mit Facetten zu füllen,

Fig. 5    Facetten zur Belegung des Flächenbereichs mit verschiedenen Umrissformen,

Fig. 6    ein erfindungsgemäßes Sicherheitselement mit durchsichtigen Facetten, und

Fig. 7    in (a) bis (c) verschiedene Projektionsgeometrien in Reflexion und Transmission.

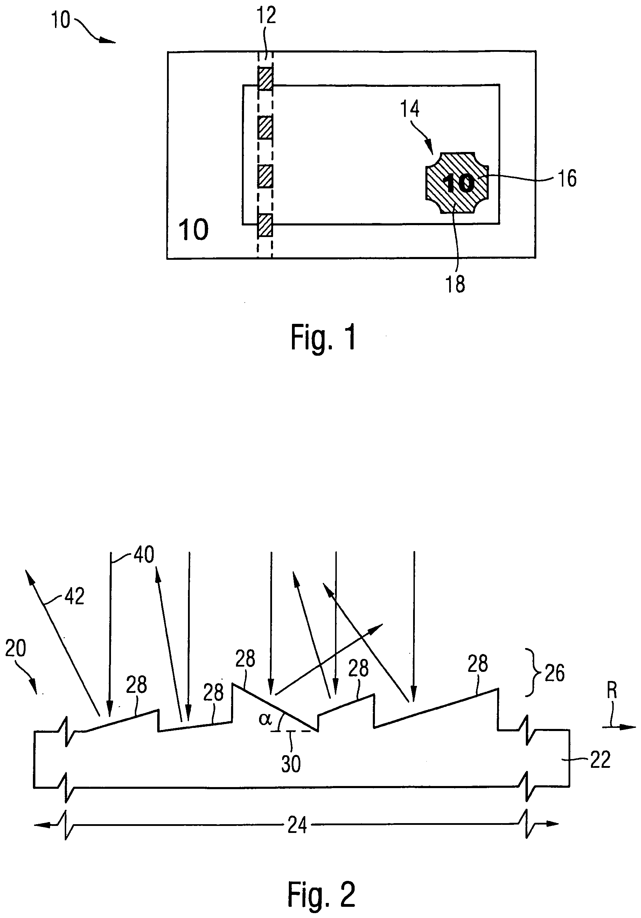

Die Erfindung wird nun am Beispiel von Sicherheitselementen für Banknoten erläutert. Fig. 1 zeigt dazu eine schematische Darstellung einer Banknote 10, die mit zwei erfindungsgemäßen Sicherheitselementen 12 und 14 versehen ist. Das erste Sicherheitselement stellt einen Sicherheitsfaden 12 dar, der an bestimmten Fensterbereichen an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 14 beliebiger Form gebildet.

Das Sicherheitselement 14 enthält eine offen sichtbare Bildinformation, im Ausführungsbeispiel ein Hologramm 16, das die Denomination "10" der Banknote darstellt. Das Sicherheitselement enthält weiter eine im Hintergrundbereich 18 des Hologramms 16 angeordnete versteckte Bildinformation, die bei normaler Beleuchtung nicht erkennbar ist und erst bei gerichteter, paralleler Beleuchtung des Sicherheitselements, beispielsweise mit einem Laserstrahl, auf einen geeignet platzierten Schirm oder eine Mattscheibe projiziert wird.

Das Sicherheitselement 14 kann in anderen Gestaltungen auch in Form einer Abdeckfolie ausgebildet sein, die über einem Fensterbereich oder einer durchgehenden Öffnung der Banknote angeordnet ist. Dabei kann das Sicherheitselement für Betrachtung in Aufsicht, Durchsicht oder für Betrachtung sowohl in Aufsicht als auch in Durchsicht ausgelegt sein.

Zur näheren Erläuterung zeigt Fig. 2 schematisch ein erfindungsgemäßes Sicherheitselement 20 im Querschnitt. Das Sicherheitselement 20 weist ein Substrat 22 auf, das in einem Flächenbereich 24 ein optisch variables Flächenmuster 26 enthält, das aus einer Mehrzahl von im Wesentlichen strahlungsoptisch wirkenden, reflektierenden Facetten 28 besteht. Die Facetten 28 sind durch ebene Flächenstücke gebildet und sind jeweils durch ihre Form, Größe und Orientierung charakterisiert. Die Orientierung einer Facette 28 wird durch die Neigung $\alpha$ zur Ebene 30 des Flächenbereichs und durch einen Azimutwinkel $\theta$ in der Ebene 30 angegeben. Der Azimutwinkel $\theta$ ist dabei der Winkel zwischen der Projektion des Normalenvektors der Facette 28 auf die Ebene 30 und einer Referenzrichtung R.

Im Ausführungsbeispiel haben die Facetten 28 eine rechteckige Form und grenzen ohne Zwischenraum aneinander an. Die Größe der Facetten 28 ist dabei unterschiedlich, wobei die in die Ebene 30 projizierten Seitenlängen der rechteckigen Facetten 28 zwischen 5 $\mu$m und 15 $\mu$m liegen. Da die Abmessungen der Facetten 28 somit weit oberhalb der Wellenlänge des sichtbaren Lichts liegen, ist sichergestellt, dass die Reflexion der Facetten 28 nicht auf beugungsoptischen, sondern im Wesentlichen auf strahlungsoptischen Effekten beruht. Die Facetten 28 reflektieren das einfallende Licht 40 somit achromatisch und anders als ein Beugungsgitter ohne Farbaufspaltung. Bei einer periodischen Anordnung entsprechender Facetten, beispielsweise auf einem quadratischen Raster mit einer Periode von 10 $\mu$m, wäre die Projektion von einem entsprechenden Gitter-Beugungsbild mit sehr scharfen Reflexen überlagert. Diese Gitterreflexe können in der Projektion so stark dominieren, dass die eigentlich gewünschte Darstellung kaum noch erkennbar ist.

Wie in Fig. 2 gezeigt, reflektiert jede der Facetten 28 das einfallende Licht 40 wie ein kleiner Spiegel nur in eine einzige Richtung 42, die durch die Orientierung der jeweiligen Facette 28 gegeben ist. Diese Eigenschaft des optisch variablen Flächenmusters 26 steht im Gegensatz zu den Eigenschaften symmetrischer Beugungsgitter, bei denen senkrecht einfallendes Licht 40 symmetrisch in eine plus erste und minus erste Beugungsordnung gebeugt wird, so dass neben einem in Richtung der plus ersten Beugungsordnung entstehenden direkten Bild in Richtung der minus ersten Beugungsordnung stets ein weiteres, konjugiertes Bild entsteht.

Dagegen wird bei der auf strahlenoptischen Effekten beruhenden Lichtreflexion an den Facetten 28 kein konjugiertes Bild erzeugt, so dass das optisch variable Flächenmuster 26 nicht nur achromatisch reflektiert, sondern aus gegenüberliegenden Betrachtungsrichtungen typischerweise auch unterschiedliche Darstellungen zeigt.

Für viele Anwendungen, wie etwa für Sicherheitselemente auf dünnen Folienstreifen, ist es wünschenswert, die Facetten 28 mit möglichst kleinen lateralen Abmessungen auszubilden, um beispielsweise bei vorgegebenen Neigungswinkeln $a \leq \alpha_{max}$ eine geringe Strukturhöhe zu erzielen. Im Rahmen der Erfindung weisen die Facetten 28 dazu in zumindest einer Richtung der Ebene 30 eine laterale Abmessung von weniger als 30 $\mu$m auf. In manchen Gestaltungen können auch noch kleinere Abmessungen, beispielsweise von $\leq 20$ $\mu$m, von $\leq 15$ $\mu$m oder von $\leq 10$ $\mu$m gewünscht oder erforderlich sein. Durch die erfindungsgemäße aperiodische Anordnung der Facetten 28 im Flächenbereich 24 ist trotz der kleinen Abmessungen der Facetten 28 dennoch sichergestellt, dass der Darstellung des Sicherheitselements kein Beugungsmuster durch eine regelmäßige Rasteranordnung kleiner Facetten überlagert ist.

Während die Facetten bei einer periodischen Anordnung auf den Gitterpunkten eines regelmäßigen Gitterrasters angeordnet sind, gibt es bei einer aperiodischen Anordnung keinen einfachen, regelmäßigen Zusammenhang zwischen den Positionen benachbarter Facetten. Dadurch wird eine konstruktive Interferenz des an benachbarten Facetten reflektierten Lichts und damit das Entstehen eines überlagerten Beugungsmusters zuverlässig verhindert.

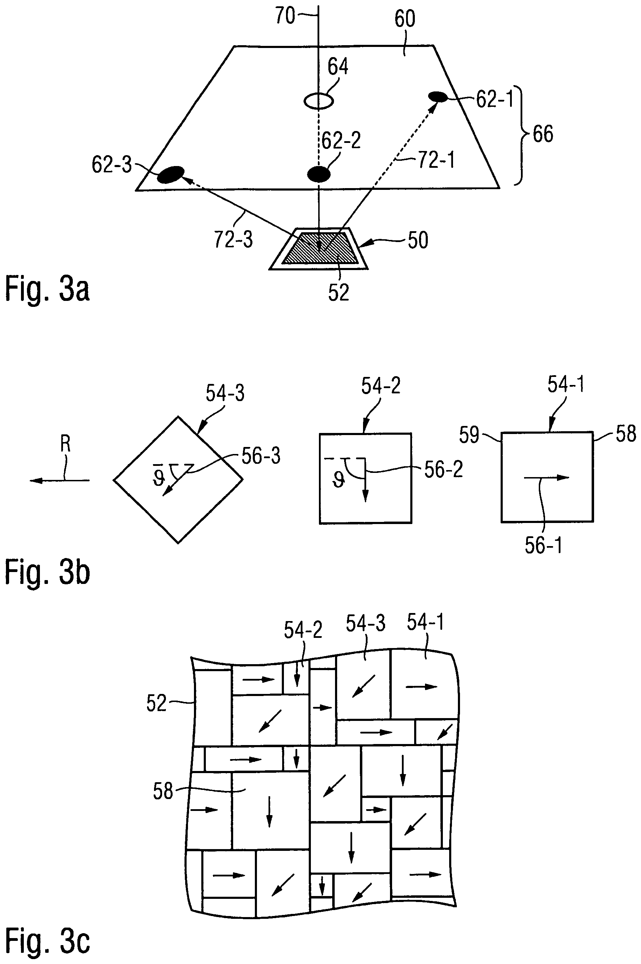

Ein Weg zur Erzeugung eines erfindungsgemäßen Sicherheitselements 50 ausgehend von gewünschten Darstellungen 66 wird nun anhand des Ausführungsbeispiels der Fig. 3 näher erläutert.

Fig. 3(a) zeigt zunächst die Geometrie bei der Projektion der Darstellungen eines Projektions-Sicherheitselements 50, das in einem Flächenbereich 52 ein erfindungsgemäßes optisch variables Flächenmuster enthält. Einfallendes paralleles Licht 70, beispielsweise von einem Laserpointer, fällt durch eine Öffnung 64 in einer Mattscheibe 60 auf das Projektions-Sicherheitselement 50. Die reflektierende Facettenanordnung des Flächenbereichs 52 projiziert auf die Mattscheibe 60 ein asymmetrisches Bild 66, das im Ausführungsbeispiel der Illustration halber aus nur drei Bildpunkten 62-1, 62-2 und 62-3 besteht. Da das einfallende Licht 70 nur in bestimmte Raumrichtungen reflektiert wird, zeigt die Facettenanordnung in unterschiedlichen Betrachtungsrichtungen unterschiedliche Darstellungen.

Die Facetten 54 des Flächenbereichs 52 werden nun aus ebenen Flächenstücken gebildet, deren Orientierung jeweils durch eine Neigung zur Ebene des Flächenbereichs 52 und einen Azimutwinkel gegeben ist. Aus den gewünschten Position der drei Bildpunkte 62-1 bis 62-3 auf der Mattscheibe 60 werden drei Orientierungen der zugehörigen Facetten 54-1 bis 54-3 so bestimmt, dass diese Facetten senkrecht einfallendes Licht 70 in Richtung der Bildpunkte 62-1 bis 62-3 reflektieren.

Jeweils eine dieser Facetten 54-1 bis 54-3 ist in Fig. 3(b) in Aufsicht gezeigt, wobei die Pfeile 56-1 bis 56-3 die Richtung angeben, in die die Facette senkrecht einfallendes Licht ablenkt. Beispielsweise steigt die Facette 54-1 von der Kante 58 zur Kante 59 an, so dass senkrecht einfallendes Licht 70 in Pfeilrichtung 56-1 und damit in Richtung des Bildpunkts 62-1 abgelenkt wird. Entsprechendes gilt für die Facetten 54-2 und 54-3.

Die Neigung der Facette 54-1 wird nun so gewählt, dass der Neigungswinkel $\alpha$ der Hälfte des Winkels zwischen einfallendem Strahl 70 und dem zum Bildpunkt 62-1 gerichteten Strahl 72-1 entspricht. Bei senkrechter Beleuchtung 70 trägt dann jede Facette 54-1 zur Erzeugung des Bildpunkts 62-1 auf der Mattscheibe 60 bei. Entsprechend werden Neigung und Azimutwinkel der Facetten 54-2 und 54-3 so gewählt, dass die reflektierten Strahlen zur Erzeugung der Bildpunkte 62-2 und 62-3 auf der Mattscheibe 60 beitragen.

Wie aus den Figuren 3(a) und (b) ersichtlich, beträgt der Azimutwinkel der Facette 54-3 bezogen auf die Referenzrichtung R gerade $\theta = 45°$, der Azimutwinkel der Facette 54-2 beträgt $\theta = 90°$ und der Azimutwinkel der Facette 54-1 ist $\theta = 180°$. Die Neigungen der beiden Facetten 54-1 und 54-2 sind gleich groß und betragen im Ausführungsbeispiel $\alpha = 10°$, während die Neigung der Facette 54-3, die dem weiter von der Öffnung 64 entfernten Bildpunkt 62-3 zugeordnet ist, bei knapp 15° liegt.

Um einerseits Facetten mit kleinen Abmessungen und damit auch kleinen Strukturhöhen zu erhalten, und andererseits ein Bild 66 großer Helligkeit erzeugen zu können, wird der gesamte Flächenbereich 52 des Sicherheitselements 50 mit Facetten 54-1 bis 54-3 gefüllt, wobei die Facetten 54, wie oben erläutert, aperiodisch angeordnet werden, um eine unerwünschte Überlagerung des Bilds 66 mit Beugungsmustern zu vermeiden.

Eine Möglichkeit, den Flächenbereich 52 aperiodisch mit Facetten 54 zu füllen, ist in Fig. 3(c) dargestellt. Im gezeigten Ausschnitt ist der Flächenbereich 52 unregelmäßig in rechteckige Kacheln 58 unterteilt, deren Größe (x,y) jeweils (a*d, b*d) beträgt, wobei d = 5 $\mu$m und a und b unabhängig voneinander jeweils gleich 1, 2 oder 3 ist. Die kleinstmögliche Kachel hat damit einen Größe von 5 $\mu$m x 5 $\mu$m (a = b = 1), so dass eine achromatische Reflexion sichergestellt ist. Die größtmögliche Kachel weist eine Größe von 15 $\mu$m x 15 $\mu$m (a = b = 3) auf, so dass die Strukturhöhe der zugehörigen Facetten 54 bei einem maximalen Neigungswinkel $\alpha_{max}$ auf

$$h_{max} = 15\ \mu m * \sin \alpha_{max}$$

begrenzt ist. Beträgt der maximale Neigungswinkel $\alpha_{max}$ beispielsweise 15°, entsprechend einer maximalen Ablenkung von 30°, so ist die Strukturhöhe der Facetten auf $h_{max} = 3,9\ \mu$m begrenzt, was eine problemlose Herstellung der Facettenanordnung mit Prägetechniken ermöglicht.

Die Kacheln 58 werden nun unregelmäßig, beispielsweise gemäß einer Pseudozufallszahlenverteilung mit einer der drei Facetten 54-1 bis 54-3 belegt, wie in Fig. 3(c) durch die entsprechenden Richtungspfeile angedeutet. Auf diese Weise entsteht eine unregelmäßige und aperiodische Verteilung der Facetten 54 im Flächenbereich 52, so dass das gewünschte Bild 66 bei Beleuchtung 70 ohne störende Farbaufspaltungen oder überlagerte Beugungsmuster auf die Mattscheibe 60 projiziert wird.

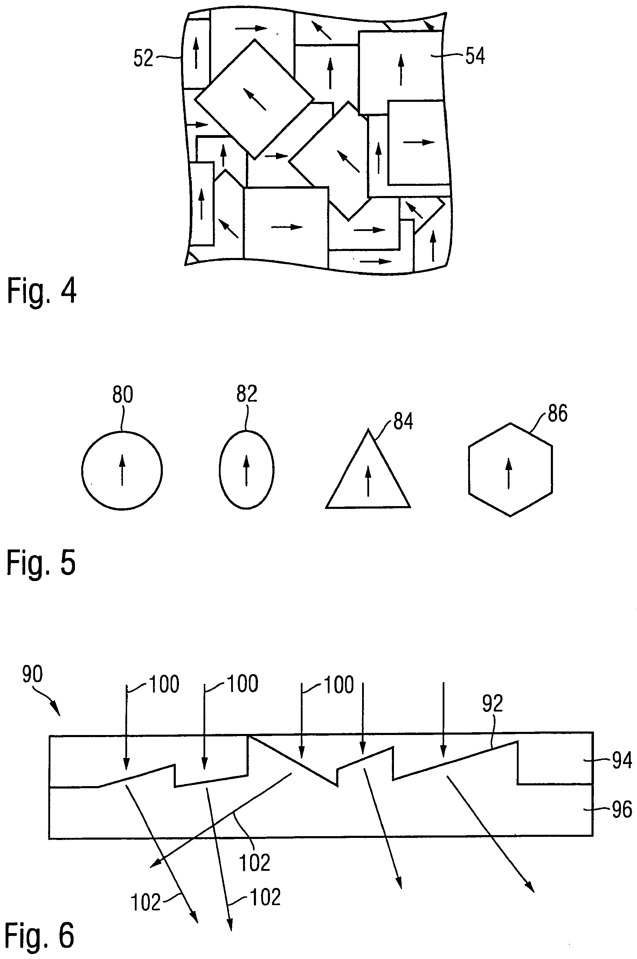

Fig. 4 illustriert eine weitere Möglichkeit, den Flächenbereich 52 aperiodisch mit Facetten 54 zu füllen. Dabei variiert nicht nur die Position, sondern auch die Form der Facetten 54 in unregelmäßiger und damit aperiodischer Weise. Bei der Auswahl der unregelmäßigen Formen wird darauf geachtet, dass keine Teilbereiche mit Abmessungen unterhalb von 2 $\mu$m entstehen. Der Grund für die Wahl nicht zu kleiner Facettenabmessungen liegt dabei insbesondere darin, dass ein an den Facetten reflektierter Lichtstrahl beugungsbedingt aufgeweitet wird. Eine Halbierung der Facettengröße bewirkt eine Verdopplung des Aufweitungswinkels, so dass die Auflösung des projizierten Bildes um einen Faktor 2 schlechter wird. Sehr kleine Facetten erzeugen daher nur lichtschwache, unscharfe Bildpunkte.

Grundsätzlich kann die Form der Facetten beliebig gewählt sein. Zusätzlich zu den bereits genannten Gestaltungen mit rechteckigem Umriss (Fig. 3(c)) und unregelmäßigem Umriss (Fig. 4) können die Facetten beispielsweise auch mit rundem Umriss 80, mit ovalem Umriss 82, mit dreieckigem Umriss 84 oder mit vieleckigem Umriss 86 ausgebildet sein, wie in Fig. 5 dargestellt.

Die Form der Facetten kann auch so gewählt sein, dass ihre laterale Abmessung in einer Richtung wesentlich größer ist als in der dazu senkrechten lateralen Richtung. Dadurch kann sich in zwei Raumrichtungen ein unterschiedliches beugungsbedingtes Auflösungsvermögen ergeben, das in speziellen Fällen von Vorteil sein kann. So kann eine Facette insbesondere in der Richtung sehr lang sein, in der sie nicht ansteigt. Damit wird der entsprechende Reflex in der Projektion in einer Richtung kaum aufgeweitet, während die Höhe der Facette noch vorteilhaft klein ist.

Die Form der Facetten 54 kann auch ein weiteres verstecktes Sicherheitsmerkmal darstellen, das sich einem Inspektor erst mittels eines Hilfsmittels, beispielsweise eines Lichtmikroskops oder einer starken Lupe, offenbart. So kann etwa bei einem Sicherheitselement für Ausweisdokumente dasselbe Bild 66 durch Facetten mit unterschiedlichem Umriss erzeugt werden, wie in den Figuren 3(c), 4 und 5 gezeigt. Die verwendete Facettenform kann beispielsweise je nach Ausgabejahr, Ausgaberegion, Seriennummer oder einer speziellen Personengruppe verschieden sein und so ein weiteres verstecktes Echtheitsmerkmal bilden.

Neben den bisher beschriebenen reflektierenden Facetten kann ein erfindungsgemäßes Sicherheitselement 90 auch durchsichtige Facetten 92 aufweisen, wie in Fig. 6 illustriert. Die Facetten 92 an der Grenzfläche zweier Medien 94, 96 mit unterschiedlichem Brechungsindex brechen das einfallende Licht 100 in unterschiedliche Richtungen 102 und erlauben so die Projektion eines Bildes in Transmission. Fig. 6 zeigt beispielhaft die Ablenkung einfallender Lichtstrahlen 100 durch die Facetten 92 an der Grenzfläche zweier Medien 94, 96 mit Brechungsindizes $n_1$ und $n_2$. Die Differenz der Brechungsindizes $\Delta = |n_1 - n_2|$ beträgt dabei vorteilhaft zumindest 0,3 oder mehr, insbesondere 0,5 oder mehr. Eines der beiden Medien 94, 96 kann auch Luft sein.

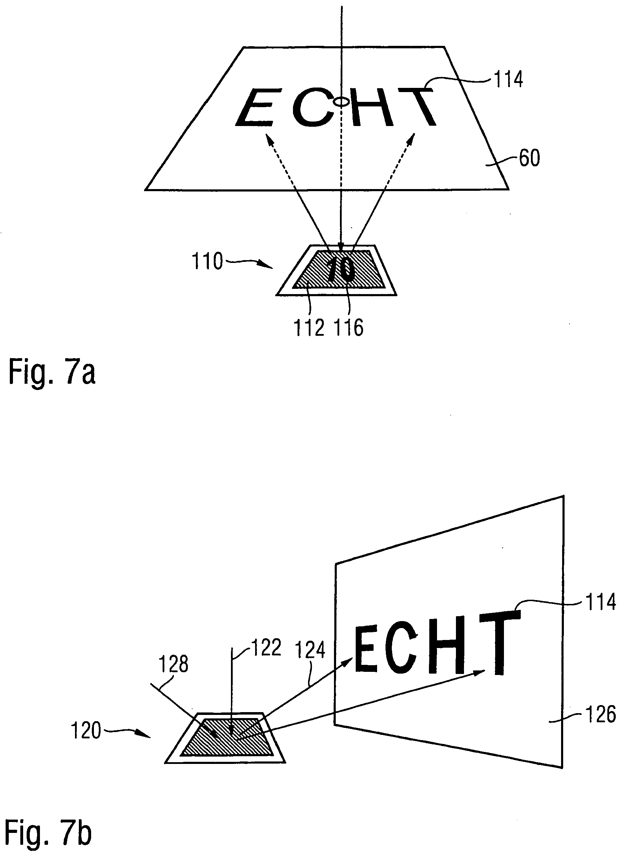

Neben den bisher beschriebenen Gestaltungen, bei denen das Projektionsbild auf eine durchstrahlte Mattscheibe geworfen wird, kommen erfindungsgemäß auch andere Projektionsgeometrien in Betracht. Fig. 7(a) zeigt zur Illustration zunächst nochmals die Geometrie der Fig. 3(a) bei der Rekonstruktion der Darstellungen eines erfindungsgemäßen Sicherheitselements 110. Das Sicherheitselement 110 projiziert bei Beleuchtung ein komplexeres Bild 114 in Form eines aus einer Mehrzahl von Bildpunkten zusammengesetzten Schriftzugs "ECHT" auf die Mattscheibe 60.

Der Sicherheitselement 110 enthält darüber hinaus eine offen sichtbare Bildinformation, nämlich ein Hologramm 116, das die Wertzahl "10" darstellt. Der Flächenbereich 112 mit dem optisch variablen Flächenmuster bildet dabei den Hintergrund des Hologramms 116. Bei normaler Beleuchtung ist der Schriftzug "ECHT" nicht sichtbar, vielmehr erscheint der Flächenbereich 112 unauffällig als weißer Hintergrund. Erst bei Beleuchtung mit dem gerichteten Licht eines Laserpointers wird der Schriftzug "ECHT" als versteckte Bildinformation auf eine Mattscheibe 60 projiziert. Für eine solche versteckte Bildinformation ist es von besonderem Vorteil, dass sie ihr Vorhandensein nicht schon durch ein Beugungsmuster oder eine Farbaufspaltung preisgibt, was jedoch bei einer regelmäßigen Anordnung von Facetten oder eine beugungsoptisch wirksamen Gitterstruktur typischerweise der Fall wäre.

Zwei weitere erfindungsgemäße Projektionsgeometrien sind in Fig. 7(b) illustriert. Das optisch variable Flächenmuster des gezeigten Sicherheitselements 120 ist dabei so ausgelegt, dass die Reflexion 124 bei senkrechter Beleuchtung 122 auf eine vorgewählte Seite erfolgt, so dass das Projektionsbild 114 neben dem Sicherheitselement 120 auf einem Schirm 126 aufgefangen werden kann. Das Flächenmuster kann dabei auch so ausgelegt sein, dass das Projektionsbild 114 nur bei schräger Beleuchtung 128 auf dem Schirm 126 entsteht.

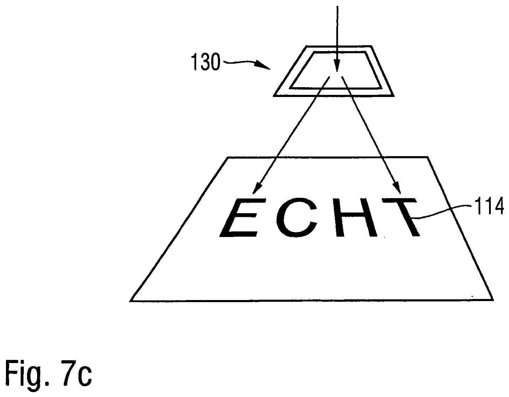

Schließlich illustriert Fig. 7(c) die Erzeugung eines Projektionsbild 114 bei einem transmittierenden Sicherheitselement 130, wie es in Zusammenhang mit Fig. 6 beschrieben wurde.

In einer Weiterbildung kann ein erfindungsgemäßes Sicherheitselement auch mehrere Bereiche enthalten, die unterschiedliche Darstellungen projizieren. Fährt man mit dem Auslesestrahl über ein solches Sicherheitselement, so erhält man wechselnde projizierte Darstellungen. Neben einem einfachen Wechsel von einem Motiv A in ein Motiv B lassen sich durch eine Vielzahl verschiedener Motive auch komplexe kinematische Effekte erzielen.

Eine weitere Besonderheit erfindungsgemäßer Sicherheitselemente besteht darin, dass die Form der projizierten Darstellung unabhängig von der Wellenlänge bzw. der Farbe des benutzten Lichts ist. Bei bekannten Sicherheitselementen, bei denen die Darstellungen durch beugungsoptisch wirksame Gitterstrukturen erzeugt werden, sind Form und Größe der Darstellungen dagegen stets von der Lichtwellenlänge abhängig. Ein für einen roten Laser berechnetes beugendes Projektionselement projiziert mit einem blauen Laser dann ein anders skaliertes, evtl. sogar verzerrtes Bild. Dagegen sind die Darstellungen der erfindungsgemäßen Sicherheitselemente unabhängig von der benutzten Wellenlänge.

Diese Eigenschaft stellt eine weitere signifikante Verbesserung des Fälschungsschutzes dar, da sie auch mit asymmetrischen Beugungsgittern nicht nachgestellt werden kann. Zur Überprüfung dieser Eigenschaft können beispielsweise zwei mit zwei verschiedenen Farben projizierte Darstellungen visuell oder maschinell verglichen werden oder die Projektion kann mit weißem Licht vorgenommen werden. Ein weiterer Vorteil gegenüber beugenden Projektionselementen liegt in der größeren Helligkeit der Projektionen. Reflektive Facetten können im Prinzip das gesamte einfallende Licht in eine gewünschte Projektionsrichtung reflektieren, während symmetrische Beugungsgitter maximal die Hälfte der einfallenden Lichtintensität in das direkte Bild projizieren können.

Das erfindungsgemäße Sicherheitselement kann etwa als homogener Sicherheitsfaden ausgebildet sein, vorteilhaft mit zusätzlichen Merkmalen, wie etwa Negativschrift oder magnetischen Eigenschaften. Das Sicherheitselement kann auch ein Sicherheitsmerkmal auf einem Sicherheitsstreifen bilden oder in Kombination mit anderen optisch variablen Elementen, wie etwa Hologrammen oder Sägezahngitterdarstellungen, eingesetzt werden.

Insbesondere kann das erfindungsgemäße optisch variable Flächenmuster als bei normaler Betrachtung unauffällige homogene Fläche vorliegen und als weiß erscheinendes Designelement in andere Darstellungen, etwa als Hintergrunddarstellung integriert sein. Das erfindungsgemäße optisch variable Flächenmuster kann auch mit anderen Darstellungen, wie etwa 3D-Darstellungen, Kippbildern oder dergleichen, verschachtelt sein.

Während die Erfindung vorwiegend am Beispiel von Projektions-Sicherheitselementen beschrieben wurde, ist die Erfindung nicht auf solche Gestaltungen beschränkt. Vielmehr können mit den erfindungsgemäßen Facettenanordnungen auch andere optisch variable Darstellungen erzeugt werden. Beispielsweise können Flipbilder erzeugt werden, die zwei oder mehr Bereiche mit unterschiedlich orientierten Facetten aufweisen, die aus verschiedenen Betrachtungsrichtungen hell aufleuchten, wie sie in den Druckschriften EP 0 868 313 B1 und EP 1 397 259 B1 für beugungsoptisch wirksame Gitterstrukturen beschrieben sind. Auch kinematische Effekte, wie sie in den Druckschriften EP 0 868 313 B1 und WO 2007/079851 beschrieben sind, können mit den erfindungsgemäßen optisch variablen Flächenmustern erzeugt werden. Die Offenbarung der genannten Druckschriften wird insoweit in die vorliegende Beschreibung aufgenommen.

Bezugszeichenliste

| 10 | Banknote |
| 12, 14 | Sicherheitselemente |
| 16 | Hologramm |
| 18 | Hintergrundbereich |
| 20 | Sicherheitselement |
| 22 | Substrat |
| 24 | Flächenbereich |
| 26 | optisch variables Flächenmuster |
| 28 | Facetten |
| 30 | Ebene des Flächenbereichs |
| 40 | einfallendes Licht |
| 42 | reflektiertes Licht |
| 50 | Sicherheitselement |
| 52 | Flächenbereich |
| 54 | Facetten |
| 54-1, 54-2, 54-3 | Facetten |
| 56-1, 56-2, 56-3 | Richtungen |
| 58 | Kacheln |
| 60 | Mattscheibe |
| 62-1, 62-2, 62-3 | Bildpunkte |
| 64 | Öffnung |
| 66 | Bild |
| 70 | einfallendes Licht |
| 72-1, 72-3 | zum Bildpunkt gerichteter Strahl |
| 80, 82, 84, 86 | Umrisse |
| 90 | Sicherheitselement |
| 92 | durchsichtige Facetten |
| 94, 96 | Medien |
| 100 | einfallendes Licht |
| 102 | Richtungen |
| 110 | Sicherheitselement |
| 112 | Flächenbereich |
| 114 | Bild |
| 116 | Hologramm |
| 120 | Sicherheitselement |
| 122 | senkrechte Beleuchtung |
| 124 | Reflexion |
| 126 | Schirm |
| 128 | schräge Beleuchtung |

Patentansprüche

1. Sicherheitselement für Sicherheitspapiere, Wertdokumente und andere Datenträger, mit einem Substrat, das in einem Flächenbereich ein optisch variables Flächenmuster enthält, welches bei unterschiedlicher Beleuchtungs- und/ oder Betrachtungsrichtung unterschiedliche Darstellungen zeigt, wobei das optisch variable Flächenmuster aus einer Mehrzahl von im Wesentlichen strahlenoptisch wirkenden Facetten gebildet ist, deren Abmessungen in zumindest einer Richtung der Ebene des Flächenbereichs kleiner als 30 μm sind, die in der Ebene des Flächenbereichs aperiodisch angeordnet sind, und wobei die Facetten in der Ebene des Flächenbereichs entweder

     a) mit gleicher Form und Größe angeordnet sind, oder
     b) in der Ebene des Flächenbereichs mit variierender Form und/ oder Größe angeordnet sind, wobei unregelmäßige Formen keine Teilbereiche mit Abmessungen unterhalb von 2 $\mu$m enthalten.

2. Sicherheitselement nach Anspruch 1, **dadurch gekennzeichnet, dass** die Facetten durch ebene Flächenstücke gebildet sind, die jeweils durch eine Neigung zur Ebene des Flächenbereichs und einen Azimutwinkel charakterisiert sind.

3. Sicherheitselement nach Anspruch 1 oder 2, **dadurch gekennzeichnet, dass** die Facetten zumindest teilweise als reflektierende Facetten und/ oder zumindest teilweise als transmittierende Facetten mit brechender Wirkung ausgebildet sind.

4. Sicherheitselement nach wenigstens einem der Ansprüche 1 bis 3, **dadurch gekennzeichnet, dass** die Facetten in der Ebene des Flächenbereichs unregelmäßig angeordnet sind.

5. Sicherheitselement nach wenigstens einem der Ansprüche 1 bis 4, **dadurch gekennzeichnet, dass** die Facetten in dem Flächenbereich mit aperiodisch oder sogar unregelmäßig variierender Form und/ oder Größe angeordnet sind.

6. Sicherheitselement nach wenigstens einem der Ansprüche 1 bis 5, **dadurch gekennzeichnet, dass** die Facetten eine maximale Ausdehnung in der Ebene des Flächenbereichs aufweisen, die zwischen 2 $\mu$m und 30 $\mu$m, insbesondere zwischen 5 $\mu$m und 15 $\mu$m liegt, und/ oder dass die Facetten in der Ebene des Flächenbereichs eine minimale Ausdehnung von 2 $\mu$m oder mehr, insbesondere von 5 $\mu$m oder mehr aufweisen.

7. Sicherheitselement nach wenigstens einem der Ansprüche 1 bis 6, **dadurch gekennzeichnet, dass** die Facetten zumindest bereichsweise mit einer reflektierenden und/ oder farbigen oder farbkippenden Beschichtung, insbesondere einer Beschichtung mit einem Interferenzsystem aus Absorber, Dielektrikum und Reflektor, versehen sind.

8. Sicherheitselement nach wenigstens einem der Ansprüche 1 bis 7, **dadurch gekennzeichnet, dass** das optisch variable Flächenmuster eine versteckte Bildinformation erzeugt, die ohne Hilfsmittel nicht erkennbar ist.

9. Sicherheitselement nach wenigstens einem der Ansprüche 1 bis 8, **dadurch gekennzeichnet, dass** das optisch variable Flächenmuster mit einem weiteren Sicherheitsmerkmal kombiniert ist, insbesondere mit einem offen sichtbaren Sicherheitsmerkmal, wie einem Hologramm oder einer optisch variablen Sägezahngitterdarstellung.

10. Sicherheitselement nach wenigstens einem der Ansprüche 1 bis 9, **dadurch gekennzeichnet, dass** das optisch variable Flächenmuster mehrere Teilbereiche enthält, die unterschiedliche Darstellungen zeigen.

11. Sicherheitselement nach wenigstens einem der Ansprüche 1 bis 10, **dadurch gekennzeichnet, dass** das Sicherheitselement ein Projektions-Sicherheitselement ist, das die unterschiedlichen Darstellungen bei gerichteter, paralleler Beleuchtung auf eine Auffangfläche projiziert.

12. Datenträger mit einem Sicherheitselement nach wenigstens einem der Ansprüche 1 bis 11.

13. Datenträger nach Anspruch 12, **dadurch gekennzeichnet, dass** der Datenträger ein Wertdokument, wie eine Banknote, insbesondere eine Papierbanknote, eine Polymerbanknote, eine Folienverbundbanknote oder eine Urkunde, ein Pass oder eine Ausweiskarte ist.

14. Prägeform zum Erzeugen einer Prägestruktur in einem Sicherheitselement gemäss Anspruch 1, mit einem Hauptkörper, der in einem Flächenbereich ein optisch variables Flächenmuster enthält, welches bei unterschiedlicher Beleuchtungs- und/ oder Betrachtungsrichtung unterschiedliche Darstellungen zeigt, wobei das optisch variable Flächenmuster aus einer Mehrzahl von im Wesentlichen strahlenoptisch wirkenden Facetten gebildet ist, deren Abmessungen in zumindest einer Richtung der Ebene des Flächenbereichs kleiner als 30 $\mu$m sind, die in der Ebene des Flächenbereichs aperiodisch angeordnet sind, und wobei die Facetten in der Ebene des Flächenbereichs entweder

    a) mit gleicher Form und Größe angeordnet sind, oder
    b) in der Ebene des Flächenbereichs mit variierender Form und/ oder Größe angeordnet sind, wobei unregelmäßige Formen keine Teilbereiche mit Abmessungen unterhalb von 2 $\mu$m enthalten.

15. Verfahren zum Herstellen eines Sicherheitselements gemäss Anspruch 1, bei dem ein Substrat bereitgestellt wird und das Substrat in einem Flächenbereich mit einem optisch variablen Flächenmuster versehen wird, welches bei unterschiedlicher Beleuchtungs- und/ oder Betrachtungsrichtung unterschiedliche Darstellungen zeigt, wobei das optisch variable Flächenmuster aus einer Mehrzahl von im Wesentlichen strahlenoptisch wirkenden Facetten gebildet wird, deren Abmessungen in zumindest einer Richtung der Ebene des Flächenbereichs kleiner als 30 µm sind, die in der Ebene des Flächenbereichs aperiodisch angeordnet werden, und wobei die Facetten in der Ebene des Flächenbereichs entweder

> a) mit gleicher Form und Größe angeordnet werden, oder
> b) in der Ebene des Flächenbereichs mit variierender Form und/oder Größe angeordnet werden, wobei unregelmäßige Formen keine Teilbereiche mit Abmessungen unterhalb von 2 µm enthalten.

**Claims**

1. A security element for security papers, value documents and other data carriers, having a substrate that includes, in a surface region, an optically variable surface pattern that displays different depictions for different illumination and/or viewing directions, the optically variable surface pattern being formed from a plurality of facets that behave substantially according to ray optics, whose dimensions in at least one direction of the plane of the surface region are less than 30 µm, and that are arranged aperiodically in the plane of the surface region, and the facets in the plane of the surface region either

> a) being arranged having the same shape and size, or
> b) being arranged in the plane of the surface region having varying shapes and/or sizes, wherein irregular shapes include no sub-regions having dimensions below 2 µm.

2. The security element according to claim 1, **characterized in that** the facets are formed by planar surface sections that are each **characterized by** an inclination to the plane of the surface region and an azimuth angle.

3. The security element according to claim 1 or 2, **characterized in that** the facets are developed at least partially as reflective facets and/or at least partially as transmissive facets having a refractive effect.

4. The security element according to at least one of claims 1 to 3, **characterized in that** the facets in the plane of the surface region are arranged irregularly.

5. The security element according to at least one of claims 1 to 4, **characterized in that** the facets in the surface region are arranged having an aperiodically or even irregularly varying shapes and/or sizes.

6. The security element according to at least one of claims 1 to 5, **characterized in that** the facets have, in the plane of the surface region, a maximum dimension that lies between 2 µm and 30 µm, especially between 5 µm and 15 µm, and/or **in that** the facets in the plane of the surface region have a minimum dimension of 2 µm or more, especially of 5 µm or more.

7. The security element according to at least one of claims 1 to 6, **characterized in that** the facets are provided, at least in some regions, with a reflective and/or colored or color-shifting coating, especially a coating having an interference system composed of an absorber, a dielectric and a reflector.

8. The security element according to at least one of claims 1 to 7, **characterized in that** the optically variable surface pattern produces a hidden piece of image information that is not perceptible without auxiliary means.

9. The security element according to at least one of claims 1 to 8, **characterized in that** the optically variable surface pattern is combined with a further security feature, especially with an openly visible security feature, such as a hologram or an optically variable sawtooth grating depiction.

10. The security element according to at least one of claims 1 to 9, **characterized in that** the optically variable surface pattern includes multiple sub-regions that display different depictions.

11. The security element according to at least one of claims 1 to 10, **characterized in that** the security element is a projection security element that, upon directional, parallel illumination, projects the different depictions onto a screen.

12. A data carrier having a security element according to at least one of claims 1 to 11.

13. The data carrier according to claim 12, **characterized in that** the data carrier is a value document, such as a banknote, especially a paper banknote, a polymer banknote, a foil composite banknote or a certificate, a passport or an identification card.

14. An embossing mold for producing an embossing pattern in a security element according to claim 1, having a main body that includes, in a surface region, an optically variable surface pattern that displays different depictions for different illumination and/or viewing directions, the optically variable surface pattern being formed from a plurality of facets that behave substantially according to ray optics, whose dimensions in at least one direction of the plane of the surface region are less than 30 µm, and that are arranged aperiodically in the plane of the surface region, and the facets in the plane of the surface region either

> a) being arranged having the same shape and size, or
>
> b) being arranged in the plane of the surface region having varying shapes and/or sizes, wherein irregular shapes include no sub-regions having dimensions below 2 $\mu$m.

15. A method for manufacturing a security element according to claim 1, in which a substrate is provided, and the substrate is provided in a surface region with an optically variable surface pattern that displays different depictions in different illumination and/ or viewing directions, the optically variable surface pattern being formed from a plurality of facets that behave substantially according to ray optics, whose dimensions in at least one direction of the plane of the surface region are less than 30 $\mu$m, and that are arranged aperiodically in the plane of the surface region, and the facets in the plane of the surface region either

> a) being arranged having the same shape and size, or
>
> b) being arranged in the plane of the surface region having varying shapes and/or sizes, wherein irregular shapes include no sub-regions having dimensions below 2 $\mu$m.

## Revendications

1. Elément de sécurité pour papiers de sécurité, documents de valeur et autres supports de données, avec un substrat, qui contient un motif de surface optiquement variable dans une zone de surface, lequel présente des représentations différentes dans un sens différent d'éclairage et/ou d'observation, le motif de surface optiquement variable étant formé d'une pluralité de facettes agissant pour l'essentiel de manière optique géométrique, dont les dimensions sont, dans au moins une direction du plan de la zone de surface, inférieures à 30 $\mu$m, qui sont disposées de façon apériodique dans le plan de la zone de surface et les facettes dans le plan de la zone de surface, étant disposées soit

> a) avec la même forme et taille,
>
> b) dans le plan de la zone de surface, étant disposées soit avec une forme et/ou une taille variable, les formes irrégulières ne contenant aucune partie de zone avec des dimensions inférieures à 2 $\mu$m.

2. Elément de sécurité selon la revendication 1, **carac-**

**térisé en ce que** les facettes sont formées par des morceaux de surface plans qui sont respectivement **caractérisés par** une inclinaison vers le plan de la zone de surface et un angle d'azimut.

3. Elément de sécurité selon la revendication 1 ou 2, **caractérisé en ce que** les facettes sont constituées au moins en partie comme des facettes réfléchissantes et/ou au moins en partie comme des facettes transmettrices avec effet réfractif.

4. Elément de sécurité selon au moins l'une quelconque des revendications 1 à 3, **caractérisé en ce que** les facettes sont disposées irrégulièrement dans le plan de la zone de surface.

5. Elément de sécurité selon au moins l'une quelconque des revendications 1 à 4, **caractérisé en ce que** les facettes dans la zone de surface sont disposées avec une forme et/ou une taille variant de façon apériodique ou même irrégulière.

6. Elément de sécurité selon au moins l'une quelconque des revendications 1 à 5, **caractérisé en ce que** les facettes comportent une expansion maximale dans le plan de la zone de surface, qui se situe entre 2 $\mu$m et 30 $\mu$m, en particulier entre 5 $\mu$m et 15 $\mu$m, et/ou en ce que les facettes dans le plan de la zone de surface comportent une expansion minimale de 2 $\mu$m ou plus, en particulier de 5 $\mu$m ou plus.

7. Elément de sécurité selon au moins l'une quelconque des revendications 1 à 6, **caractérisé en ce que** les facettes sont dotées au moins par section d'un revêtement réfléchissant et/ou coloré ou à changement de couleur, en particulier d'un revêtement avec un système d'interférence composé d'un absorbeur, d'un diélectrique et d'un réflecteur.

8. Elément de sécurité selon au moins l'une quelconque des revendications 1 à 7, **caractérisé en ce que** le motif de surface optiquement variable produit une information imagée dissimulée, qui n'est pas identifiable sans moyen auxiliaire.

9. Elément de sécurité selon au moins l'une quelconque des revendications 1 à 8, **caractérisé en ce que** le motif de surface optiquement variable est combiné avec une autre caractéristique de sécurité, en particulier avec une caractéristique de sécurité ouvertement visible, comme un hologramme ou une représentation de trame en dents de scie optiquement variable.

10. Elément de sécurité selon au moins l'une quelconque des revendications 1 à 9, **caractérisé en ce que** le motif de surface optiquement variable contient plusieurs parties de zones, qui montrent des représentations différentes.

11. Elément de sécurité selon au moins l'une quelconque des revendications 1 à 10, **caractérisé en ce que** l'élément de sécurité est un élément de sécurité à projection qui projette les représentations différentes sur une surface réceptrice sous un éclairage orienté parallèle.

12. Support de données avec un élément de sécurité selon au moins l'une quelconque des revendications 1 à 11.

13. Support de données selon la revendication 12, **caractérisé en ce que** le support de données est un document de valeur, comme un billet de banque, notamment un billet de banque en papier, un billet de banque en polymère, un billet de banque en composite de feuilles ou un document, un passeport ou une carte d'identité.

14. Matrice pour la production d'une structure de matriçage dans un élément de sécurité selon la revendication 1, avec un corps principal, qui contient un motif de surface optiquement variable dans une zone de surface, lequel montre des représentations différentes pour une direction d'éclairage et/ou d'observation différente, le motif de surface optiquement variable étant formé d'une pluralité de facettes agissant pour l'essentiel de manière optique géométrique, dont les dimensions sont, dans au moins une direction du plan de la zone de surface, inférieures à 30 $\mu$m, qui sont disposées de façon apériodique dans le plan de la zone de surface et les facettes dans le plan de la zone de surface, étant disposées soit

   a) avec la même forme et taille,
   b) dans le plan de la zone de surface, étant disposées soit avec une forme et/ou une taille variable, les formes irrégulières ne contenant aucune partie de zone avec des dimensions inférieures à 2 $\mu$m.

15. Procédé pour fabriquer un élément de sécurité selon la revendication 1 pour lequel un substrat est préparé et le substrat est doté d'un motif de surface optiquement variable dans une zone de surface, lequel montre des représentations différentes pour une direction d'éclairage et/ou d'observation différente, le motif de surface optiquement variable étant formé d'une pluralité de facettes agissant pour l'essentiel de manière optique géométrique, dont les dimensions sont, dans au moins une direction du plan de la zone de surface, inférieures à 30 $\mu$m, qui sont disposées de façon apériodique dans le plan de la zone de surface et les facettes dans le plan de la zone de surface, étant disposées soit

a) avec la même forme et taille,
b) dans le plan de la zone de surface, étant disposées soit avec une forme et/ou une taille variable, les formes irrégulières ne contenant aucune partie de zone avec des dimensions inférieures à 2 $\mu$m.

Fig. 1

Fig. 2

70 — 60

64

62-1

66

62-2

62-3

72-1

72-3

50

52

## Fig. 3a

54-3

54-2

54-1

56-3

56-2

59

58

R

56-1

## Fig. 3b

54-2  54-3  54-1

52

58

## Fig. 3c

Fig. 4

Fig. 5

Fig. 6

**Fig. 7a**

**Fig. 7b**

Fig. 7c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005038499 A2
- EP 0762238 A1
- DE 102007019522 A1
- EP 0868313 B1
- EP 1397259 B1
- WO 2007079851 A